**Europäisches Patentamt**

**European Patent Office**

**Office européen des brevets**

(11) Veröffentlichungsnummer: **0 304 610 B1**

## (12) EUROPÄISCHE PATENTSCHRIFT

(45) Veröffentlichungstag der Patentschrift: **23.12.92**

(21) Anmeldenummer: **88111450.8**

(22) Anmeldetag: **16.07.88**

(51) Int. Cl.⁵: **B60T 8/36**, F15B 13/043

(54) **Regelventileinrichtung.**

(30) Priorität: **26.08.87 DE 3728463**

(43) Veröffentlichungstag der Anmeldung:
**01.03.89 Patentblatt 89/09**

(45) Bekanntmachung des Hinweises auf die
Patenterteilung:
**23.12.92 Patentblatt 92/52**

(84) Benannte Vertragsstaaten:
**AT CH DE FR GB IT LI SE**

(56) Entgegenhaltungen:
**EP-A- 0 145 858**
**EP-A- 0 154 214**
**DE-U- 8 619 384**
**FR-A- 2 396 676**

(73) Patentinhaber: **WABCO Westinghouse Fahrzeugbremsen GmbH
Am Lindener Hafen 21 Postfach 91 12 80
W-3000 Hannover 91(DE)**

(72) Erfinder: **Möller, Johannes. Ing.-grad.
Am Denkmal 5
W-3005 Hemmingen OT Devese(DE)**

(74) Vertreter: **Schrödter, Manfred
WABCO Westinghouse Fahrzeugbremsen
GmbH Am Lindener Hafen 21 Postfach 91 12
80
W-3000 Hannover 91(DE)**

## Beschreibung

Die Erfindung betrifft eine Regelventileinrichtung, insbesondere für Antiblockiereinrichtungen von druckluftbetätigbaren Fahrzeugbremsanlagen, gemäß dem Oberbegriff des Patentanspruchs 1.

Derartige Regelventileinrichtungen sind aus der DE 33 45 697 A1 bekannt.
Die in der DE 33 45 697 A1 gezeigte Regelventileinrichtung weist eine über einen Druckmitteleingang mit einer Druckmittelquelle verbindbare Druckmitteleingangskammer und eine mit einem Verbraucher, wie z.B. dem Radbremszylinder eines Fahrzeugs, verbundene Druckmittelausgangskammer auf.
Die Druckmittelausgangskammer ist einerseits über ein steuerbares Einlaßventil mit der Druckmitteleingangskammer und andererseits über ein Auslaßventil mit der Atmosphäre verbindbar. Ein zur Betätigung des Auslaßventils dienender Betätigungskolben begrenzt mit einer ersten Wirkfläche die Druckmittelausgangskammer und mit einer der ersten Wirkfläche entgegengerichteten zweiten Wirkfläche eine Steuerkammer. Die Steuerkammer ist über ein Steuerventil wahlweise mit der Atmosphäre oder mit der Druckmitteleingangskammer verbindbar.

Der Betätigungskolben wird von Druck in der Druckmittelausgangskammer in Öffnungsrichtung des Auslaßventils und vom Druck in der Steuerkammer in Schließrichtung des Auslaßventils beaufschlagt.

Die Druckeinsteuerung in den Verbraucher erfolgt von einer Druckmittelquelle über ein als kombiniertes Einlaß- und Auslaßventil ausgebildetes Ventil, wie z.B. ein Bremsventil, und das geöffnete Einlaßventil der Regelventileinrichtung, bei gleichzeitiger Beaufschlagung der dem Auslaßventil der Regelventileinrichtung zugeordneten Steuerkammer mit dem Druckmittel in der Druckmitteleingangskammer.
Der Druckabbau im Verbraucher erfolgt ebenfalls über das in der Offenstellung befindliche Einlaßventil der Regelventileinrichtung sowie die Druckmitteleingangskammer und das Auslaßventil des der Regelventileinrichtung vorgeschalteten kombinierten Einlaß- und Auslaßventils.
Die Steuerkammer des Auslaßventils der Regelventileinrichtung wird über das zugeordnete Steuerventil ebenfalls über die Druckmitteleingangskammer bzw. die zu dieser führenden Druckmittelleitung entlüftet.

Lediglich dann, wenn ein geregelter Druckabbau im Verbraucher erfolgen soll, wird durch Ansteuerung des dem Auslaßventil der Regelventileinrichtung zugeordneten Steuerventils der Druck im Verbraucher über das Auslaßventil der Regelventileinrichtung abgesenkt.

Bei nicht geregeltem Druckabbau im Verbraucher erfolgt die Entlüftung des Verbrauchers also stets über das Einlaßventil der Regelventileinrichtung, die Druckmitteleingangskammer, die vom Druckmitteleingang zum kombinierten Einlaß- und Auslaßventil führende Druckmittelleitung sowie über das Auslaßventil des kombinierten Einlaß- und Auslaßventils.

Von Nachteil ist bei dieser bekannten Regelventileinrichtung, daß der Entlüftungsvorgang des Verbrauchers relativ lang ist.

Der Erfindung liegt die Aufgabe zugrunde, eine Regelventileinrichtung der eingangs erwähnten Art zu schaffen, mit welcher sich kürzere Entlüftungszeiten erzielen lassen.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, eine Regelventileinrichtung zu erhalten, bei welcher es mit einfachen Mitteln möglich ist, jeden Entlüftungsvorgang über das Auslaßventil der Regelventileinrichtung erfolgen zu lassen, unabhängig davon, ob ein durch das dem Auslaßventil der Regelventileinrichtung zugeordnete Steuerventil bewirkter geregelter Druckabbau im Verbraucher stattfindet oder lediglich ein ungeregelter Druckabbau, bewirkt durch Entlüften der von dem kombinierten Einlaß- und Auslaßventil zur Regelventileinrichtung führenden Druckmittelleitung.
Dadurch, daß bei einem Entlüftungsvorgang, bewirkt durch das der Regelventileinrichtung vorgeschaltete, z.B. als Bremsventil ausgebildete kombinierte Einlaß- und Auslaßventil, die Druckmittelausgangskammer der Regelventileinrichtung nicht über den Druckmitteleingang der Regelventileinrichtung entlüftet wird, wirkt auf die Membran des Auslaßventils beim Entlüften der dem Auslaßventil zugeordneten Steuerkammer eine große Druckkraft in Öffnungsrichtung des Auslaßventils. Die Öffnungsbewegung des Auslaßventils wird dadurch beschleunigt.

Der Druckabbau im Verbraucher erfolgt auf kürzestem Weg über das Auslaßventil der Regelventileinrichtung zur Atmosphäre hin.
Gemäß einer vorteilhaften Ausgestaltung der Erfindung ist in einer mit dem Einlaßventil verbundenen ersten Teilkammer der Druckmitteleingangskammer der Regelventileinrichtung ein als Drossel-Rückschlagventil ausgebildetes zusätzliches Ventil vorgesehen, welches einen ungehinderten Durchtritt des Druckmittels von einer zweiten Teilkammer der Druckmitteleingangskammer zu der ersten Teilkammer, welche mit dem Einlaßventil verbunden ist, ermöglicht, jedoch beim Entlüftungsvorgang nur einen gedrosselten Rückstrom des Druckmittels aus der ersten Teilkammer zu der mit dem Druckmitteleingang verbundenen zweiten Teilkammer hin zuläßt.

Die FR-A 2 396 676 zeigt eine Regelventileinrichtung mit einer Zusatzkammer, die über ein in Richtung auf die Zusatzkammer zu in die offene Stellung bringbares Drossel-Rückschlagventil mit einer von einem Relaiskolben begrenzten Steuerkammer verbindbar ist. Der Relaiskolben dient zur Betätigung eines kombinierten Einlaß- und Auslaßventils, über welches eine mit einem Verbraucher verbundene Druckmittelausgangskammer wahlweise mit einer mit einer Druckmittelquelle verbundenen Eingangskammer oder mit der Atmosphäre verbindbar ist.

Dieses Drossel-Rückschlagventil dient in Verbindung mit der Steuerkammer und der Zusatzkammer zur Beeinflussung des Steuerdruckes und somit auch zur Beeinflussung des Bewegungsablaufes des Relaiskolbens.

Es ist bei dieser Anordnung des Drossel-Rückschlagventils jedoch nicht möglich, das Auslaßventil des kombinierten Einlaß- und Auslaßventils in der Weise zu beeinflussen, daß das Auslaßventil bei einem Bremslösevorgang durch Staudruckbildung in der Druckmittelausgangskammer beschleunigt in die offene Stellung gebracht wird, so daß die Druckmittelausgangskammer und somit auch der mit dieser verbundene Verbraucher sehr schnell über den Druckmittelauslaß zur Atmosphäre hin entlüftet wird.

Anhand der Zeichnung werden nachstehend zwei Ausführungsbeispiele der Erfindung näher erläutert.

Es zeigen:

Fig. 1 eine Regelventileinrichtung mit einer zweiteilig ausgebildeten Druckmitteleingangskammer, wobei die mit einem Einlaßventil verbundene Teilkammer ein Drossel-Rückschlagventil aufweist, welches vom Druck in der zweiten Teilkammer in Richtung auf die erste Teilkammer zu in die Offenstellung bringbar ist,

Fig. 2 die erste Teilkammer und die zweite Teilkammer der Druckmitteleingangskammer, wobei in der ersten Teilkammer ein um einen Stift verschwenkbarer klappenartiger Ventilkörper eines Drossel-Rückschlagventils angeordnet ist und

Fig. 3 einen klappenartig ausgebildeten Ventilkörper mit einer Drosselöffnung.

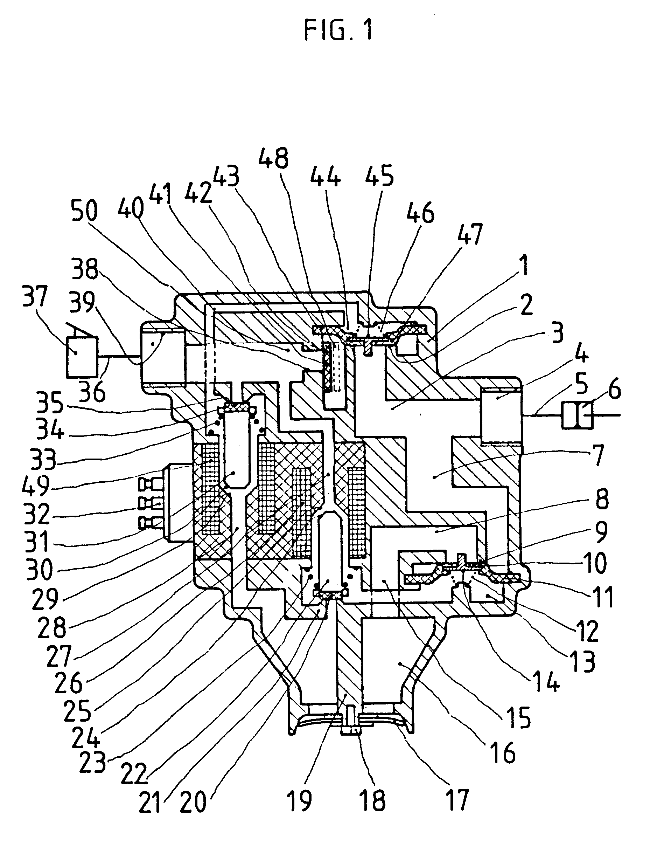

In Fig. 1 ist eine Regelventileinrichtung für eine Antiblockiereinrichtung einer druckluftbetätigbaren Fahrzeugbremsanlage dargestellt.

Die Regelventileinrichtung weist ein in einem Gehäuse (1) angeordnetes steuerbares Einlaßventil, bestehend aus einem Ventilkörper (47) und einem gehäusefesten Ventilsitz (2), und ein in demselben Gehäuse (1) angeordnetes Auslaßventil, bestehend aus einem Ventilkörper (10) und einem gehäusefesten Ventilsitz (9), auf.

Das Einlaßventil (47, 2) ist von einem als Membran (43) ausgebildeten Betätigungskolben betätigbar, welcher mit seinem äußeren Randbereich im Gehäuse (1) befestigt ist und eine zentrisch angeordnete, den Ventilkörper (47) tragende metallische Armierung (45) aufweist. In gleicher Weise ist das Auslaßventil (9, 10) von einem als Membran (11) ausgebildeten Betätigungskolben betätigbar, welcher mit seinem äußeren Randbereich im Gehäuse (1) befestigt ist und eine zentrisch angeordnete, den Ventilkörper (10) tragende metallische Armierung (14) aufweist.

Die Membran (43) begrenzt mit ihrer dem Ventilkörper (47) des Einlaßventils (47, 2) zugewandten ersten Wirkfläche eine Druckmitteleingangskammer (48, 50) und mit ihrer der Druckmitteleingangskammer (48, 50) abgewandten zweiten Wirkfläche eine Steuerkammer (44). Die Druckmitteleingangskammer (48, 50) ist in eine erste Teilkammer (48) und eine zweite Teilkammer (50) unterteilt. Ein in einer die erste Teilkammer (48) von der zweiten Teilkammer (50) trennenden Gehäusewand vorgesehener Durchlaß (38) verbindet die erste Teilkammer (48) mit der zweiten Teilkammer (50). Die erste Teilkammer (48) ist mit dem Einlaßventil (47, 2) verbunden und die zweite Teilkammer (50) steht mit einem Druckmitteleingang (39) in Verbindung. Eine sich an einer die Steuerkammer (44) begrenzenden Gehäusewand abstützende Feder (46) beaufschlagt die Membran (43) in Schließrichtung des Einlaßventils (47, 2).

In gleicher Weise begrenzt die dem Auslaßventil (9, 10) zugeordnete Membran (11) mit ihrer dem Ventilkörper (10) des Auslaßventils (9, 10) zugewandten ersten Wirkfläche eine Druckmittelausgangskammer (3, 7) und mit ihrer der Druckmittelausgangskammer (3, 7) abgewandten Wirkfläche eine Steuerkammer (13). Eine sich an einer die Steuerkammer (13) begrenzenden Wand abstützende Feder (12) beaufschlagt die Membran (11) in Schließrichtung des Auslaßventils (9, 10).

Über den im Gehäuse (1) angeordneten Druckmitteleingang (39) sowie an diesen angeschlossene Druckmittelleitung (36) ist die zweite Teilkammer (50) der Druckmitteleingangskammer (48, 50) mit einem als Bremsventil (37) ausgebildeten kombinierten Einlaß- und Auslaßventil verbindbar, welches wiederum mit einer Druckmittelquelle in Verbindung steht.

Die Druckmittelausgangskammer (3, 7) ist über einen Druckmittelausgang (4) und eine Druckmittelleitung (5) mit einem als Bremszylinder (6) ausgebildeten Verbraucher verbunden.

Eine vom Auslaßventil (9, 10) gegen die Druckmittelausgangskammer (3, 7) absperrbare Kammer (8) im Gehäuse (1) ist über einen im Gehäuse (1) vorgesehenen Kanal (15) mit einem zur Atmosphäre hin führenden Entlüftungsraum (16) verbunden. Im Entlüftungsraum (16) ist zentrisch ein gehäusefester Zapfen (19) angeordnet, an welchem eine den Entlüftungsraum (16) abdeckende als Rückschlagventil ausgebildete elastische Klappe (17) vorgesehen ist, die an der freien Stirnseite des Zapfens (19) mittels einer Schraube (18) befestigt ist und in Richtung auf die Atmosphäre zu in die Offenstellung bringbar ist.

In einer Ausnehmung des Gehäuses (1) sind zwei als Steuerventile für das Einlaßventil (47, 2) und das Auslaßventil (9, 10) dienende Elektromagnetventile angeordnet.

Das erste Steuerventil für das Einlaßventil (47, 2) der Regelventileinrichtung setzt sich aus einer Spule (49), einem zentrisch in der Spule (49) angeordneten und in Richtung der Längsachse der Spule (49) verlaufenden Ankerführungsrohr sowie einem im Ankerführungsrohr gegen die Kraft einer Feder (33) verschiebbar angeordneten Anker (31) zusammen, der an seinen einander abgewandten Stirnseiten je einen Ventilkörper (34) und (30) trägt. Der eine Ventilkörper (34) bildet mit einem ersten Ventilsitz (35) ein Einlaßventil (34, 35) und der andere Ventilkörper (30) bildet mit einem zweiten Ventilsitz (29) ein Auslaßventil (29, 30).

Das zweite Steuerventil für das Auslaßventil (9, 10) der Regelventileinrichtung setzt sich ebenfalls aus einer Spule (26), einem Ankerführungsrohr sowie einem im Ankerführungsrohr gegen die Kraft einer Feder (23) verschiebbar angeordneten Anker (22) zusammen, der an seinen einander abgewandten Stirnseiten je einen Ventilkörper (24) und (20) trägt. Der eine Ventilkörper (24) bildet mit einem ersten Ventilsitz (25) ein Einlaßventil (24, 25) und der andere Ventilkörper (20) bildet mit einem zweiten Ventilsitz (21) ein Auslaßventil (20, 21).

Über einen im Gehäuse (1) angeordneten Kanal (40) ist die Steuerkammer (44) für das Einlaßventil (47, 2) der Regelventileinrichtung mit dem ersten Steuerventil verbunden. Ein Kanal (28) verbindet den Entlüftungsraum (16) ebenfalls mit dem ersten Steuerventil.

Über das zweite Steuerventil, welches der Steuerkammer (13) für das Auslaßventil (9, 10) der Regelventileinrichtung zugeordnet ist, ist die Steuerkammer (13) wahlweise mit der Atmosphäre oder über einen Kanal (27) mit der zweiten Teilkammer (50) der Druckmitteleingangskammer (48, 50) verbindbar.

In der ersten Teilkammer (48) der Druckmitteleingangskammer (48, 50) ist eine als Rückschlagventil ausgebildete zusätzliche Ventileinrichtung vorgesehen. Das Rückschlagventil besteht aus einem vorzugsweise als Membran ausgebildeten klappenartigen Ventilkörper (42), welcher eine Drosselöffnung (41) aufweist. Der Ventilkörper (42) ist so ausgebildet und so angeordnet, daß er mit der der ersten Teilkammer (48) der Druckmitteleingangskammer (48, 50) zugewandten Seite des die erste Teilkammer (48) mit der zweiten Teilkammer (50) verbindenden Durchlasses (38) ein in Richtung auf die erste Teilkammer (48) zu in die Offenstellung bringbares Drossel-Rückschlagventil (38, 42, 41) bildet.

Das Drossel-Rückschlagventil (38, 42, 41) kann auf verschiedene Art und Weise ausgebildet und im Bereich der ersten Teilkammer (48) angeordnet sein. Es kann z.B. aus einem elastischen klappenartigen Teil bestehen, welches an die Membran (43) des Einlaßventils (47, 2) anvulkanisiert ist. Es ist auch möglich, das Drossel-Rückschlagventil als einen in Richtung auf die zweite Teilkammer (50) zu federbelasteten Körper, wie z.B. eine Kugel oder eine Platte, auszubilden, der eine Drosselbohrung aufweist und so bemessen ist, daß der Durchlaß (38) von diesem federbelasteten Körper verschließbar ist.

Die als Steuerventile dienenden Elektromagnetventile sind über elektrische Anschlüsse (32) ansteuerbar.

Die Funktion der im vorstehenden beschriebenen Regelventileinrichtung wird nachstehend näher erläutert.

Bei einem Bremsvorgang wird von dem Bremsventil (37) über die Druckmittelleitung (36) und den Druckmitteleingang (39) Druckmittel in die zweite Teilkammer (50) der Druckmitteleingangskammer (48, 50) eingesteuert. Unter der Einwirkung des Druckes in der zweiten Teilkammer (50) wird das Drossel-Rückschlagventil (38, 42, 41) in die Offenstellung gebracht. Über das geöffnete Drossel-Rückschlagventil (38, 42, 41) gelangt das Druckmittel in die erste Teilkammer (48) der Druckmitteleingangskammer (48, 50). Gleichzeitig gelangt von der zweiten Teilkammer (50) über den als Steuerleitung dienenden Kanal (27) und das sich in der Offenstellung befindliche Einlaßventil (24, 25) des zweiten Steuerventils als Steuerdruck dienendes Druckmittel in die Steuerkammer (13) des Auslaßventils (9, 10) der Regelventileinrichtung. Das Auslaßventil (20, 21) des zweiten Steuerventils befindet sich in der Schließstellung.

Das Einlaßventil (34, 35) des ersten Steuerventils befindet sich in der Schließstellung und das Auslaßventil (29, 30) dieses Steuerventils befindet sich in der Offenstellung.

Der sich in der Druckmitteleingangskammer (48, 50) aufbauende Druck belastet die Membran (43) des Einlaßventils (47, 2) gegen die Kraft der Feder (46) in Öffnungsrichtung des Einlaßventils (47, 2) und bringt so das Einlaßventil (47, 2) in die Offenstellung. Von der Druckmitteleingangskammer (48, 50) gelangt jetzt Druckmittel durch das geöffnete Einlaßventil (47, 2) in die Druckmittelausgangskammer (3, 7) und von dieser durch den Druckmittelausgang (4) sowie die mit dem Druckmittelausgang (4) verbundene Druckmittelleitung (5) in den Bremszylinder (6).

Der Druck in der Druckmittelausgangskammer (3, 7) belastet die Membran (11) des Auslaßventils (9, 10) in Öffnungsrichtung des Auslaßventils (9, 10). Da die Höhe des sich in der Steuerkammer (13) des Auslaßventils (9, 10) aufbauenden Steuerdruckes gleich ist der Höhe des sich in der Druckmittelausgangskammer (3, 7) aufbauenden Verbraucherdruckes, die der Steuerkammer (13) zugewandte Wirkfläche der Membran (11) jedoch größer ist als die der Druckmittelausgangskammer (3, 7) zugewandte Wirkfläche der Membran (11), verbleibt das Auslaßventil (9, 10) in der Schließstellung.

Wird zwecks Entlüftens der Arbeitskammer des Bremszylinders (6) das Bremsventil (37) umgeschaltet, so werden die Druckmittelleitung (36) sowie der mit dieser verbundene Druckmitteleingang (39) und die zweite Teilkammer (50) der Regelventileinrichtung über das Auslaßventil des Bremsventils (37) zur Atmosphäre hin entlüftet.

Da bei diesem Vorgang eine Druckdifferenz zwischen dem Druck in der zweiten Teilkammer (50) und dem Druck in der ersten Teilkammer (48) der Druckmitteleingangskammer (48, 50) entsteht, gelangt das Drossel-Rückschlagventil (38, 42, 41) in die Schließstellung. Aus der Steuerkammer (13) des Auslaßventils (9, 10) der Regelventileinrichtung strömt Steuerdruckmittel durch das geöffnete Einlaßventil (24, 25) des zweiten Steuerventils sowie den Kanal (27) zur zweiten Teilkammer (50) hin und von dieser weiter durch den Druckmitteleingang (39) und die Druckmittelleitung (36) sowie das Bremsventil (37) zur Atmosphäre.

Die dabei auftretende Druckdifferenz zwischen dem sich abbauenden Steuerdruck in der Steuerkammer (13) und dem in der Druckmittelausgangskammer (3, 7) anstehenden Verbraucherdruck bewirkt, daß die Membran (11) des Auslaßventils (9, 10) vom Verbraucherdruck in der Druckmittelausgangskammer (3, 7) in Richtung auf die Steuerkammer (13) zu bewegt wird und so das Auslaßventil (9, 10) in die Offenstellung gebracht wird.

Die Arbeitskammer des Bremszylinders (6) wird über die Druckmittelausgangskammer (3, 7), das geöffnete Auslaßventil (9, 10) sowie die Kammer (8) und den zum Entlüftungsraum (16) hin führenden Kanal (15), welcher über das Rückschlagventil (17) mit der Atmosphäre verbindbar ist, entlüftet.

Da das zwischen der ersten Teilkammer (48) und der zweiten Teilkammer (50) der Druckmitteleingangskammer (48, 50) angeordnete Rückschlagventil als Drossel-Rückschlagventil ausgebildet ist, baut sich auch eine geringe Menge des Druckmittels im Bremszylinder (6) über das geöffnete Einlaßventil (47, 2) sowie die Druckmitteleingangskammer (48, 50) und die im Drosselrückschlagventil (38, 42, 41) angeordnete Drosselbohrung (41) zur Atmosphäre hin ab. Durch die Anordnung der Drosselbohrung (41) im Rückschlagventil (38, 42, 41) wird ein gutes Abstufen des Bremslösevorganges ermöglicht.

Ist der Druck im Bremszylinder (6) und somit auch der Druck in der Druckmittelausgangskammer (3, 7) und in der Druckmitteleingangskammer (48, 50) soweit abgesunken, daß er in etwa die Höhe des Atmosphärendruckes hat, so gelangt das Auslaßventil (9, 10) durch die Kraft der Feder (12) in die Schließstellung. Desgleichen gelangt das Einlaßventil (47, 2) mittels der Kraft der Feder (46) in die Schließstellung.

Soll bei einem Bremsvorgang der Druck im Bremszylinder (6) geregelt werden, so erfolgt dies in bekannter Weise durch Ansteuern der als Elektromagnetventile ausgebildeten Steuerventile. Zwecks Druckhaltens im Bremszylinder (6) z.B. wird das der Steuerkammer (44) des Einlaßventils (47, 2) zugeordnete erste Steuerventil angesteuert, das Einlaßventil (34, 35) des ersten Steuerventils in die Offenstellung und das Auslaßventil (29, 30) dieses Steuerventils in die Schließstellung gebracht, und über den Kanal (40) Steuerdruckmittel in die Steuerkammer (44) des Einlaßventils (47, 2) eingesteuert. Der sich in der Steuerkammer (44) aufbauende Steuerdruck bewirkt eine Bewegung der Membran (43) in Richtung auf die Druckmitteleingangskammern (48, 50) zu, wodurch das Einlaßventil (47, 2) in die Schließstellung gebracht wird.

Soll ein geregelter Druckabbau im Bremszylinder (6) erfolgen, so wird das der Steuerkammer (13) des Auslaßventils (9, 10) zugeordnete, als Elektromagnetventil ausgebildete zweite Steuerventil in der Weise angesteuert, daß das Einlaßventil (23, 25) dieses Steuerventils in die Schließstellung gelangt und gleichzeitig das Auslaßventil (20, 21) des Steuerventils geöffnet wird. Der in der Steuerkammer (13) des Auslaßventils (9, 10) befindliche Steuerdruck wird über das geöffnete Auslaßventil (20, 21) des zweiten Steuerventils und den Entlüftungsraum (16) zur Atmosphäre hin abgesenkt. Die dabei auftretende Druckdifferenz zwischen dem Druck in der Steuerkammer (13) und dem Druck in der Druckmittelausgangskammer (3, 7) bewirkt ein Öffnen des Auslaßventils (9, 10) der Regelventileinrichtung.

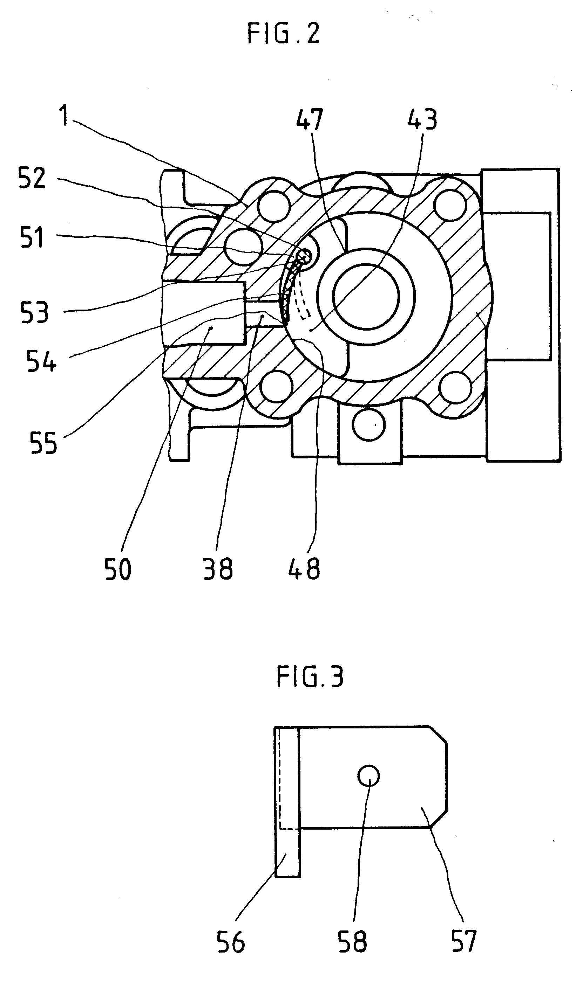

Fig. 2 zeigt schematisch die Druckmitteleingangskammer, den Druckmittelausgang und die Membran des Einlaßventils der Regelventileinrichtung sowie das in der ersten Teilkammer der Druckmitteleingangskammer angeordnete Drossel-Rückschlagventil. Der besseren Übersicht halber sind die den in Fig. 1 dargestellten Bauteilen gleichen Bauteile mit gleichen Bezugszeichen versehen.

In Fig. 2 ist die in das Gehäuse (1) der Regelventileinrichtung eingespannte Membran (43) dargestellt, welche die erste Teilkammer (48) der Druckmitteleingangskammer (48, 50) von der Steuerkammer des Einlaßventils trennt. Die Membran (43) trägt den Ventilkörper (47), der mit einem gehäusefesten Ventilsitz das Einlaßventil der Regelventileinrichtung bildet, über welches die Druckmitteleingangskammer (48, 50) mit der Druckmittelausgangskammer und dem daran anschließenden Druckmittelausgang verbindbar ist.

Die Druckmitteleingangskammer (48, 50) ist mit dem an diese anschließenden, mit dem Bremsventil in Verbindung stehenden Druckmitteleingang verbunden. An der die Druckmitteleingangskammer (48, 50) in die beiden Teilkammern (48) und (50) unterteilenden Wand, welche von dem Drucklaß (38) durchdrungen wird, ist nahe dem Drucklaß (38) eine sich in die erste Teilkammer (48) der Druckmitteleingangskammer (48, 50) hinein erstreckende nasenartige Anformung (51) vorgesehen, die eine Ausnehmung (52) zur Aufnahme eines Stiftes (53) aufweist. Der Stift (53) dient als Halterung für einen klappenartigen, vorzugsweise elastischen Körper (54), der unter leichter Vorspannung an einem Teil der die erste Teilkammer (48) von der zweiten Teilkammer (50) trennenden Wand der Druckmitteleingangskammer (48, 50) anliegt.

Der klappenartige Körper (54) ist so angeordnet und so bemessen, daß er den überwiegenden Teil des Querschnittes des Durchlasses (38) abdeckt. Ein geringer Spalt, der von dem freien Ende des klappenartigen Körpers (54) und einem Teil der die erste Teilkammer (48) von der zweiten Teilkammer (50) trennenden Wand begrenzt wird, dient als Drosselöffnung (55) für das von dem klappenartigen Körper (54) und den Durchlaß (38) gebildete, in Richtung auf die erste Teilkammer (48) der Druckmitteleingangskammer (48, 50) zu in die Offenstellung bringbare Drossel-Rückschlagventil (38, 54, 55).

Fig. 3 zeigt bezüglich der Lagerung der Rückschlagklappe für ein Drosselrückschlagventil den gleichen Aufbau wie die in Fig. 2 gezeigte Lagerung des klappenartigen Körpers, welcher mit dem der ersten Teilkammer der Druckmitteleingangskammer der Regelventileinrichtung zugewandten Randbereich des Durchlasses ein Rückschlagventil bildet.

Die Rückschlagklappe gemäß Fig. 3 ist an einem Stift (56) befestigt, der in einer Bohrung in der Druckmitteleingangskammer der Regelventileinrichtung gelagert ist. Die Rückschlagklappe (57) besteht vorzugsweise aus einem elastischen Werkstoff und ist so bemessen und so angeordnet, daß sie an einem Teil der die erste Teilkammer der Druckmitteleingangskammer begrenzenden Wand anliegend den gesamten Querschnitt des die erste Teilkammer mit der zweiten Teilkammer verbindenden Durchlasses im Gehäuse der Regelventileinrichtung abdeckt und so mit dieser ein Rückschlagventil bildet.

Ein in der Rückschlagklappe (57) angeordneter Druchlaß (58) stellt eine Drosselöffnung dar, welche bei geschlossenem Rückschlagventil ein gedrosseltes Abströmen von Druckmittel aus der ersten Teilkammer der Druckmitteleingangskammer zur zweiten Teilkammer der Druckmitteleingangskammer hin und weiter durch den Druckmitteleingang zum Bremsventil und über dieses zur Atmosphäre hin ermöglicht.

Es ist natürlich auch möglich, die zusätzliche Ventileinrichtung als einfaches Rückschlagventil und nicht, wie im vorstehenden beschrieben, als Drossel-Rückschlagventil auszubilden. Bei der Anordnung eines solchen einfachen Rückschlagventils würde beim Entlüften des Verbrauchers (z.B. des Bremszylinders) das Öffnen des Auslaßventils der Regelventileinrichtung schlagartig erfolgen.

**Patentansprüche**

1. Regelventileinrichtung, insbesondere für Antiblockiereinrichtungen von druckluftbetätigbaren Fahrzeugbremsanlagen, mit folgenden Merkmalen:

a) Es ist eine Druckmitteleingangskammer (48, 50) vorgesehen, welche über einen Druckmitteleingang (39) mit einer Druckmittelquelle verbindbar ist;

b) es ist eine mit einem Verbraucher verbundene Druckmittelausgangskammer (3, 7) vorgesehen;

c) die Druckmittelausgangskammer (3, 7) ist über ein steuerbares Einlaßventil (47, 2) mit der Druckmitteleingangskammer (48, 50) verbindbar;

d) die Druckmittelausgangskammer (3, 7) ist über ein Auslaßventil (9, 10) mit der Atmosphäre verbindbar;

e) zur Betätigung des Auslaßventils (9, 10) ist ein Betätigungskolben (11) vorgesehen;

f) der Betätigungskolben (11) ist in Schließrichtung des Auslaßventils (9, 10) von einem Druck in einer Steuerkammer (13) beaufschlagbar;

h) die Steuerkammer (13) des Auslaßventils (9, 10) ist über ein Steuerventil (24, 20, 25, 21, 22, 26) wahlweise mit der Atmosphäre oder mit der Druckmitteleingangskammer (48, 50) verbindbar;

gekennzeichnet durch die folgenden Merkmale:

i) Die Druckmitteleingangskammer (48, 50) ist in eine erste Teilkammer (48) und eine zweite Teilkammer (50) unterteilt;

k) die erste Teilkammer (48) und die zweite Teilkammer (50) sind über eine nach Art eines Rückschlagventils ausgebildete zusätzliche Ventileinrichtung (42, 38) miteinander verbindbar;

l) die erste Teilkammer (48) ist mit dem Einlaßventil (47, 2) verbunden;

m) die zweite Teilkammer (50) ist mit dem Druckmitteleingang (39) der Regelventileinrichtung verbunden;

n) das Steuerventil (24, 20, 25, 21, 22, 26) des Auslaßventils (9, 10) ist mit der zweiten Teilkammer (50) verbunden;

o) die zusätzliche Ventileinrichtung (38, 42) ist in Richtung auf die erste Teilkammer (48) zu unter Einwirkung des Druckes in der zweiten Teilkammer (50) in die Offenstellung bringbar.

2. Regelventileinrichtung nach Anspruch 1, dadurch gekennzeichnet, daß die zusätzliche Ventileinrichtung als Rückschlagventil (38, 42) ausgebildet ist.

3. Regelventileinrichtung nach wenigstens einem der vorhergehenden Ansprüche, dadurch gekennzeichnet, daß die zusätzliche Ventileinrichtung (38, 42) als Drossel-Rückschlagventil ausgebildet ist.

4. Regelventileinrichtung nach wenigstens einem der vorhergehenden Ansprüche, dadurch gekennzeichnet, daß das Rückschlagventil (38, 42) aus einem in der ersten Teilkammer (48) angeordneten klappenartigen Ventilkörper (42) besteht, welcher im Bereich eines in einer Gehäusewand der Regelventileinrichtung angeordneten, die erste Teilkammer (48) mit der zweiten Teilkammer (50) miteinander verbindenden Durchlasses (38) angeordnet ist.

5. Regelventileinrichtung nach wenigstens einem der vorhergehenden Ansprüche, dadurch gekennzeichnet, dar das Rückschlagventil als federbelasteter Ventilkörper ausgebildet ist, der auf einem den die erste Teilkammer (48) und die zweite Teilkammer (50) miteinander verbindenden Durchlaß (38) begrenzenden Ventiisitz aufsitzt.

6. Regelventileinrichtung nach wenigstens einem der vorhergehenden Ansprüche, gekennzeichnet durch die folgenden Merkmale:

a) Zur Betätigung des Einlaßventils (47, 2) dient ein Betätigungskolben, der aus einer in das Gehäuse (1) der Regelventileinrichtung eingespannten Membran (43) besteht;

b) die Membran (43) ist mit einem Teil ihres äußeren Randbereiches im Bereich des Durchlasses (38) welcher zur Verbindung der ersten Teilkammer (48) mit der zweiten Teilkammer (50) dient, befestigt;

c) der nach Art eine Klappe (42) ausgebildete Ventilkörper des Rückschlagventils (38, 42) ist mit seinem einen Ende an einem Teil einer Halterung für die Membran (43) befestigt;

d) der nach Art einer Klappe (42) ausgebildete Ventilkörper ist so bemessen, daß er mit dem der ersten Teilkammer (48) zugewandten Randbereich des Durchlasses (38) des Rückschlagventil (38, 42) bildet.

7. Regelventileinrichtung nach wenigstens einem der vorhergehenden Ansprüche, gekennzeichnet durch die folgenden Merkmale:

a) Als Rückschlagventil dient ein klappenartiger Ventilkörper (42), der mit dem der ersten Teilkammer (48) zugewandten Randbereich des die erste Teilkammer (48) mit der zweiten Teilkammer (50) verbindenden Durchlasses (38) das Rückschlagventil (38, 42) bildet;

b) der klappenartige Ventilkörper (42) ist mit seinem einen Ende an einem Stift (53) befestigt, welcher im Gehäuse (1) innerhalb der ersten Teilkammer (48) angeordnet ist;

c) der klappenartige Ventilkörper (42) ist so bemessen, daß er den überwiegenden Teil des Querschnittes des Durchlasses (38) abdeckt.

## Claims

1. A control valve arrangement, in particular for anti-lock arrangements of compressed air-operable vehicle brake systems, having the following features:

a) a pressure medium inlet chamber (48, 50) is provided, which is arranged to be connected to a pressure medium source by way of a pressure medium inlet (39);

b) a pressure medium outlet chamber (3, 7) connected to a load is provided;

c) the pressure medium outlet chamber (3, 7) is arranged to be connected to the pressure medium inlet chamber (48, 50) by way of a controllable inlet valve (47, 2);

d) the pressure medium outlet chamber (3, 7) is arranged to be connected to the atmosphere by way of an outlet valve (9, 10);
e) an operating piston (11) is provided for actuation of the outlet valve (9, 10);
f) the operating piston (11) is arranged to be pressurized in the closing direction of the outlet valve (9, 10) by a pressure in a control chamber (13);
h) the control chamber (13) of the outlet valve (9, 10) is arranged to be connected to the atmosphere or, alternatively, to the pressure medium inlet chamber (48, 50) by way of a control valve (24, 20, 25, 21, 22, 26);
characterized by the following features:
i) the pressure medium inlet chamber (48, 50) is divided into a first partial chamber (48) and a second partial chamber (50);
k) the first partial chamber (48) and the second partial chamber (50) are arranged to be connected to one another by way of an additional valve arrangement (42, 38) constructed as a non-return valve;
l) the first partial chamber (48) is connected to the inlet valve (47, 2);
m) the second partial chamber (50) is connected to the pressure medium inlet (39) of the control valve arrangement;
n) the control valve (24, 20, 25, 21, 22, 26) of the outlet valve (9, 10) is connected to the second partial chamber (50);
o) the additional valve arrangement (38, 42) is arranged to be brought into the open position in the direction towards the first partial chamber (48) under the influence of the pressure in the second partial chamber (50).

2. A control valve arrangement according to claim 1, characterized in that the additional valve arrangement is constructed as a non-return valve (38, 42).

3. A control valve arrangement according to at least one of the preceding claims, characterized in that the additional valve arrangement (38, 42) is constructed as a throttle non-return valve.

4. A control valve arrangement according to at least one of the preceding claims, characterized in that the non-return valve (38, 42) consists of a flap-like valve member (42) arranged in the first partial chamber (48), which member is arranged in the region of an opening (38) that is arranged in a housing wall of the control valve arrangement and connects together the first partial chamber (48) with the second partial chamber (50).

5. A control valve arrangement according to at least one of the preceding claims, characterized in that the non-return valve is constructed as a spring-loaded valve member which rests on a valve seat surrounding the opening (38) connecting together the first partial chamber (48) and the second partial chamber (50).

6. A control valve arrangement according to at least one of the preceding claims, characterized by the following features:
a) an operating piston which consists of a diaphragm (43) clamped in the housing (1) of the control valve arrangement serves for actuating the inlet valve (47, 2);
b) the diaphragm (43) is secured at a part of its outer edge region in the region of the opening (38) which serves to connect the first partial chamber (48) with the second partial chamber (50);
c) the valve member of the non-return valve (38, 42) constructed as a flap (42) is secured at one end to a part of a retaining means for the diaphragm (43);
d) the valve member constructed as a flap (42) is dimensioned so that, together with the edge region of the opening (38) facing towards the first partial chamber (48), it forms the non-return valve (38, 42).

7. A control valve arrangement according to at least one of the preceding claims, characterized by the following features :
a) a flap-like valve member (42) serves as the non-return valve, which valve member, together with the edge region, facing the first partial chamber (48), of the opening (38) connecting the first partial chamber (48) with the second partial chamber (50), forms the non-return valve (38, 42);
b) the flap-like valve member (42) is secured at one end to a pin (53) which is arranged in the housing (1) within the first partial chamber (48);
c) the flap-like valve member (42) is dimensioned so that it covers the major part of the cross-section of the opening (38).

**Revendications**

1. Dispositif de robinetterie de régulation, en particulier pour dispositifs antiblocage d'installations de freins de véhicule manoeuvrables par l'air comprimé, présentant les caractéristiques suivantes:
a) Il est prévu une chambre (48, 50) d'entrée de fluide sous pression qui, par l'intermédiaire d'une entrée (39) du fluide sous pression, peut être reliée avec une source de fluide sous pression;

b) il est prévu une chambre (3, 7) de sortie du fluide sous pression reliée à un utilisateur;

c) la chambre (3, 7) de sortie du fluide sous pression peut être reliée, par l'intermédiaire d'un robinet à soupape d'arrivée (47, 2), pilotable, avec la chambre (48, 50) d'entrée du fluide sous pression;

d) la chambre (3, 7) de sortie du fluide sous pression peut être reliée, par l'intermédiaire d'un robinet à soupape d'échappement (9, 10), avec l'atmosphère;

e) pour manoeuvrer le robinet à soupape d'échappement (9, 10) est prévu un piston de manoeuvre (11);

f) le piston de manoeuvre (11) peut être contraint dans la direction de fermeture du robinet à soupape d'échappement (9, 10) par une pression régnant dans une chambre pilote (13);

h) la chambre pilote (13) du robinet à soupape d'échappement (9, 10) peut être reliée, par l'intermédiaire d'un robinet à soupape de commande (24, 20, 25, 21, 22, 26), au choix, soit avec l'atmosphère soit avec une chambre (48, 50) d'entrée du fluide sous pression;

dispositif caractérisé par les caractéristiques suivantes:

i) la chambre (48, 50) d'entrée du fluide sous pression est divisée en une première chambre partielle (48) et en une seconde chambre partielle (50);

k) la première chambre partielle (48) et la seconde chambre partielle (50) peuvent être reliées l'une avec l'autre par l'intermédiaire d'un dispositif de robinetterie supplémentaire (42, 38) conçu à la façon d'un clapet de non retour;

l) la première chambre partielle (48) est reliée avec le robinet à soupape d'arrivée (47, 2);

m) la seonde chambre partielle (50) est reliée avec l'entrée (39) du fluide sous pression du dispositif de robinetterie de régulation;

n) le robinet à soupape pilote (24, 20, 25, 21, 22, 26) du robinet à soupape d'échappement (9, 10) est relié avec la seconde chambre partielle (50);

o) le dispositif de robinetterie supplémentaire (38, 42) peut être amené en position d'ouverture en direction de la première chambre partielle (48) sous l'action de la pression régnant dans la seconde chambre partielle (50).

**2.** Dispositif de robinetterie de régulation selon la revendication 1, caractérisé par le fait que le dispositif de robinetterie supplémentaire est conçu sous forme de clapet de non retour (38, 42).

**3.** Dispositif de robinetterie de régulation selon au moins l'une des revendications précédentes, caractérisé par le fait que le dispositif de robinetterie supplémentaire (38, 42) est conçu sous forme de clapet de non retour à passage étranglé.

**4.** Dispositif de robinetterie de régulation selon au moins l'une des revendications précédentes, caractérisé par le fait que le clapet de non retour (38, 42) est constitué d'un obturateur (42), en forme de clapet, qui est disposé dans la première chambre partielle (48) et de façon plus précise dans la zone d'un passage (38) prévu dans une paroi du carter du dispositif de robinetterie de régulation et reliant l'une avec l'autre la première chambre partielle (48) avec la seconde chambre partielle (50).

**5.** Dispositif de robinetterie de régulation selon au moins l'une des revendications précédentes, caractérisé par le fait que le clapet de non retour est conçu sous forme d'un obturateur qui est contraint par un ressort et qui a son assise sur un siège de clapet qui limite le passage (38) qui relie l'une avec l'autre la première chambre partielle (48) et la seconde chambre partielle (50).

**6.** Dispositif de robinetterie de régulation selon au moins l'une des revendications précédentes, caractérisé par les caractéristiques suivantes.

a) la manoeuvre du robinet à soupape d'arrivée (47, 2) est assurée par un piston de manoeuvre qui est constitué d'une membrane (43) bridée dans le carter (1) du dispositif de robinetterie de régulation;

b) la membrane (43) est fixée, par une partie de sa zone de bordure extérieure, dans la zone du passage (38) qui sert à relier la première chambre partielle (48) avec la seconde chambre partielle (50);

c) l'obturateur, conçu à la façon d'un clapet (42), du clapet de non retour (38, 42) est fixé par sa première extrémité à une partie d'un support prévu pour la membrane (43);

d) l'obturateur conçu à la façon d'un clapet (42) est dimensionné de façon qu'avec la zone de bordure du passage (38) orientée en direction de la première chambre partielle (48), il forme le clapet de non retour (38, 42).

7. Dispositif de robinetterie de régulation selon au moins l'une des revendications précédentes, caractérisé par les caractéristiques suivantes:

a) sert de clapet de non retour un obturateur (42) du type clapet qui, avec la zone de bordure, orientée en direction de la première chambre partielle (48), du passage (38) reliant la première chambre partielle (48) avec la seconde chambre partielle (50), forme le clapet antiretour (38, 42);

b) l'obturateur en forme de clapet (42) est fixé par sa première extrémité à un axe (53) qui est disposé dans le carter (1) à l'intérieur de la première chambre partielle (48).

c) l'obturateur en forme de clapet (42) est dimensionné de façon à recouvrir la plus grande partie de la section du passage (38).

# FIG. 1

# FIG.2

# FIG.3